(19) Europäisches Patentamt
European Patent Office
Office européen des brevets

(11) **EP 4 606 773 A1**

(12) **EUROPEAN PATENT APPLICATION**

(43) Date of publication:
27.08.2025 Bulletin 2025/35

(21) Application number: 24206706.4

(22) Date of filing: 15.10.2024

(51) International Patent Classification (IPC):
*C01G 49/00* (2006.01)    *C01G 53/51* (2025.01)
*H01M 4/505* (2010.01)

(52) Cooperative Patent Classification (CPC):
**C01G 49/009; C01G 53/51; H01M 4/505;**
**H01M 10/054;** C01P 2002/52; C01P 2002/54;
C01P 2004/61; C01P 2006/40; Y02E 60/10

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: 22.02.2024 CN 202410195316

(71) Applicants:
• **Guizhou Zhenhua E-CHEM Inc.**
**Guiyang City, Guizhou Province 550014 (CN)**
• **Guizhou Zhenhua E-CHEM Co., Ltd**
**Guiyang City, Guizhou Province 550014 (CN)**

• **Guizhou Zhenhua Yilong E-CHEM Co., Ltd**
**552400 Southwest Guizhou, Autonomous**
**Prefecture (CN)**

(72) Inventors:
• **CHAOYI, Zhou**
**Guizhou Province, 550014 (CN)**
• **XIANG, Qianxin**
**Guizhou Province, 550014 (CN)**
• **LI, Jinkai**
**Guizhou Province, 550014 (CN)**

(74) Representative: **Bardehle Pagenberg**
**Partnerschaft mbB**
**Patentanwälte Rechtsanwälte**
**Prinzregentenplatz 7**
**81675 München (DE)**

(54) **PRE-SODIUM TREATED POSITIVE ELECTRODE MATERIAL FOR COPPER-ZINC-BASED SODIUM ION BATTERY AND METHOD OF PREPARING THE SAME**

(57) The present invention provides a pre-sodium treated positive electrode material for copper-zinc-based sodium ion battery and method of preparing the same. The method comprises obtaining a mixed solution containing copper-zinc-based elements through wet pre-sodium first, then conducting spray drying of the mixed solution containing copper-zinc-based elements to obtain precursor powder of positive electrode material for copper-zinc-based sodium ion battery, and then mixing the precursor powder with a sodium source for sintering, coating and crushing to obtain positive electrode material for copper-zinc-based sodium ion battery. The pre-sodium treated positive electrode material for copper-zinc-based sodium ion battery provided by the present invention introduces weakly oxidizing zinc and nickel elements on the basis of the copper-based material, reducing the use of highly oxidizing copper and iron elements. After being prepared into a battery, the oxidation of metal ions in the electrochemical environment is reduced overall, greatly reducing the oxidation of copper ions to the electrolyte, reducing the $CO_2$ gas generated by oxidation and decomposition of the electrolyte, stabilizing the electrochemical environment, and improving the electrical performance of the battery.

Figure 1

**Description**

**Technical Field**

The present invention relates to a pre-sodium treated positive electrode material for copper-zinc-based sodium ion battery and method of preparing the same, which belongs to the technical field of sodium ion battery.

**Background**

In 2014, Hu Yongsheng et al. in China first discovered the electrochemical activity of $Cu^{3+}/Cu^{2+}$ redox pairs in layered oxides, and designed and prepared a series of low-cost Cu based positive electrode materials. After nearly 10 years of unremitting efforts, positive electrode materials for copper-based sodium ion battery and sodium ion batteries have been demonstratively applied, but the demonstrative applications have not met the expectations of the designers.

After preparing positive electrode material for copper-based sodium ion battery into sodium ion batteries, on the one hand, the specific capacity of the battery is low, resulting in a low energy density of the battery, which cannot meet people's demand for energy density; On the other hand, after preparing copper-based positive electrode material into batteries, due to the strong oxidizing nature of divalent copper ions in electrochemical environment, it is easy to oxidize and decompose the electrolyte, producing $CO_2$ gas. As the cycle progresses, the electrolyte continuously oxidizes and decomposes, producing more $CO_2$ gas, leading to a decline of the battery's electrical performance. Therefore, copper-based positive electrode materials still have advantages in short-term cycling performance, but long-term cycling will result in a large amount of gas production, leading to a sharp deterioration of battery's performance. So, it is necessary to develop positive electrode materials for sodium ion battery with higher specific capacity and less gas production.

After continuous research and development and improvement by scientists, nickel-iron-manganese series positive electrode materials for sodium ion battery have been developed in recent years. The specific capacity of this material is higher than that of copper-based materials under the same voltage conditions, and the cyclic gas production is slightly reduced. However, due to the use of a large amount of precious nickel metal, the high cost limits the widespread use of this material. Given the above, it is still necessary to develop positive electrode materials for sodium ion battery with low cost, high specific capacity, and low cyclic gas production.

**Summary**

In response to the shortcomings in existing technology, the present invention proposes a pre-sodium treated positive electrode material for copper-zinc-based sodium ion battery and preparation method thereof. The positive electrode material not only continues with the excellent cycling performance of copper-based materials, but also significantly reduces the gas production during cycling process, promoting widespread application of positive electrode materials for sodium ion battery.

An aspect of the present invention provides a preparation method for a pre-sodium treated positive electrode material for copper-zinc-based sodium ion battery, the method comprises the following steps:

S1: wet pre-sodium: adding zinc salt, copper salt, iron salt, M source and sodium salt in a stoichiometric ratio of 0.78~1.0:0.02~0.08:0.25~0.36:0.58~0.65:0.01~0.08 to a measuring cup, stirring and dissolving to obtain a mixed salt solution; adding oxide of copper or oxide of zinc and mixed salt solution to a sand grinder for sand grinding for a certain period of time to obtain a mixed solution containing copper-zinc-based elements;

S2: spray drying for the mixed solution containing copper-zinc-based elements of S1 to obtain precursor powder of positive electrode material for copper-zinc-base sodium ion battery;

S3: mixing the precursor powder of S2 with a sodium source for sintering, adding N source for coating treatment, and finally crushing, to obtain the positive electrode material for copper-zinc-based sodium ion battery.

According to another aspect of the present disclosure, the oxide of copper is copper oxide, the oxide of zinc is zinc oxide, nickel salt or manganese salt is carbonate, sulfate, oxalate or acetate, iron salts are ferrous sulfate heptahydrate, ferrous sulfate monohydrate, ferrous oxalate or ferrous chloride, copper salt is anhydrous copper sulfate or copper sulfate pentahydrate, and zinc salt is anhydrous zinc sulfate, zinc sulfate monohydrate or zinc sulfate heptahydrate.

According to another aspect of the present disclosure, in the sand grinding process, the corresponding amount is weighed according to the mass ratio of material: water: zirconium beads=1~1.5:3~5:2~5.0.

According to another aspect of the present disclosure, in step S1, the molar ratio of sodium element content to total metal element content is 0.05~0.5, and the sodium source is sodium carbonate, sodium hydroxide, sodium bicarbonate, sodium acetate, sodium nitrate or sodium chloride.

According to another aspect of the present disclosure, the N source is at least one selected from Ca, Ti, Mg, Al, W, Zr, Sr, B, Ba, Ce, Mo, Co, La, Si, P, S or Li.

According to another aspect of the present disclosure, the sintering is performed twice, with a first sintering at a temperature of 870°C~945°C, and a second sintering at a temperature of 300°C~800°C.

According to another aspect of the present disclosure, the method for coating can be either solid-phase or liquid-phase.

According to another aspect of the present disclosure, the method for crushing can be ball milling, mechanical crushing, or air flow crushing, and the particle size of the positive electrode material for copper-zinc-based sodium ion battery after crushing is median particle size D50 which is 5.2 ~ 14$\mu$m.

According to another aspect of the present disclosure, the chemical formula of the pre-sodium treated positive electrode material for copper-zinc-based sodium ion battery is: $Na_mCu_xZn_yFe_zM_{1-x-y-z}O_2$, $0.75 \leq m \leq 1.08$, M is at least one selected from Ni, Co, Mn, Ca, Ti, Mg, Al, W, Zr, Sr, B, Ba, Ce, Mo, La, Si, P, S or Li, and $0.005 \leq x \leq 0.10$, $0.005 \leq y \leq 0.09$, $0.20 \leq z \leq 0.45$.

Meanwhile, another aspect of the present invention also provides a pre-sodium treated positive electrode material for copper-zinc-based sodium ion battery, the material is prepared by the method of preparing a pre-sodium treated positive electrode material for copper-zinc-based sodium ion battery mentioned above.

Another aspect of the present invention provides a positive electrode for sodium ion battery, the positive electrode for the sodium ion battery comprises the positive electrode material for copper-zinc-based sodium ion battery mentioned above as a positive electrode active substance.

Another aspect of the present invention provides a sodium ion battery, the sodium ion battery comprises the positive electrode for sodium ion battery mentioned above, a negative electrode, and an electrolyte containing sodium salt. According to one aspect of the present invention, the sodium ion battery can be applied as power sources in distributed energy storage systems, electric tools, or electric vehicles.

Another aspect of the present invention provides a power system, energy storage system or mobile storage device, the system or device is prepared by the sodium ion battery mentioned above.

Due to the above technical solution, the advantages of the present invention are:

1. The pre-sodium treated positive electrode material for copper-zinc-based sodium ion battery provided by the present invention introduces weakly oxidizing zinc and nickel elements on the basis of copper-based material, reducing the use of highly oxidizing copper and iron elements. After the material is prepared into a battery, the oxidation of metal ions in the electrochemical environment is reduced overall, greatly reducing the oxidation of electrolyte by copper ions, reducing the $CO_2$ gas generated by oxidation and decomposition of the electrolyte, stabilizing the electrochemical environment, and improving the electrical performance of the battery.

2. The preparation method of the present invention introduces sand grinding and pre-sodium treatment, which is different from conventional sand grinding methods. In the conventional preparation method, although sintering provides sufficient power for sodium ion diffusion, the effect is still not ideal enough. In addition, the ion radius of sodium is larger than that of copper ions, zinc ions, manganese ions, iron ions, and nickel ions. In order to achieve sufficient diffusion of sodium ions in this matrix materials with small ion radius, either a higher sintering temperature and sufficient sintering time should be provided; Or a distributed diffusion approach should be adopted. In this regard, in the present invention, partial sodium sources are placed in the sand grinding process. On the one hand, the sand grinding reduces the particle size of sodium source, and on the other hand, sodium sources are introduced during the precursor preparation, the distribution of sodium sources from the inside to the outside of the material is more uniform, which is more conducive to the diffusion and migration of sodium ions in the subsequent sintering process, and the sodium ion occupancy inside the material structure is more sufficient.

3. Conducting the spray drying treatment after sand grinding can reduce the water content of the material. The sodium ion inside the material is not easy to be converted into sodium carbonate, which is conducive to reducing the residual sodium content of the material, especially the sodium carbonate content in the residual sodium.

**Description of Drawings**

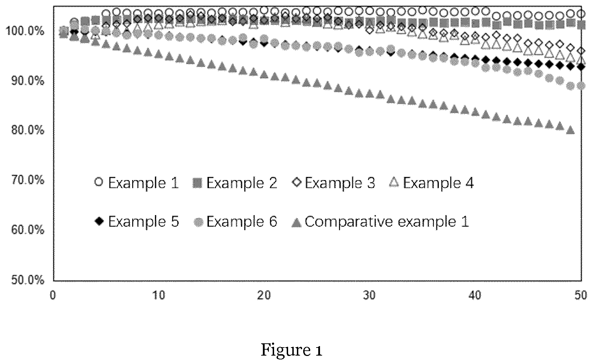

Figure 1 shows a comparison of the charging cycles of positive electrode materials made in examples 1 to 6 and comparative example 1.

**Detailed embodiments**

The raw materials or reagents used in the present invention are purchased from mainstream manufacturers in the market. For those without specifying the manufacturer or concentration, conventional raw materials or reagents can be used as substitutes, as long as they can achieve the expected effect. There is no special restriction. The instruments and equipment used in the examples are all purchased from major manufacturers in the market, and there are no special restrictions as long as they can play the expected role. If specific technology or conditions are not specified in the examples, follow the technology or conditions described in the literature in this field or follow the product manual. The sources of raw materials and equipment used in examples and comparative examples of the present invention are shown in Table 1.

Table 1 The raw materials/equipment used in the examples of the present invention

| Raw materials/equipment | Model/Grade | Manufacturer/Seller |
|---|---|---|
| sodium carbonate | / | Guizhou Golden Molar Chemical Co., Ltd. |
| manganese carbonate | / | Shandong Pule New Materials Co., Ltd. |
| nickel carbonate | / | Baoding Fosai Cobalt Nickel New Materials Co., Ltd. |
| manganese sulfate | / | Guizhou Tianlihe Chemical Co., Ltd. |
| Nickel Sulfate | / | Guizhou Tianlihe Chemical Co., Ltd. |
| ferrous sulfate | / | Guizhou Tianlihe Chemical Co., Ltd. |
| Manganese oxalate | / | Guizhou Tianlihe Chemical Co., Ltd. |
| nickel oxalate | / | Guizhou Tianlihe Chemical Co., Ltd. |
| Zinc sulfate heptahydrate | / | Guizhou Tianlihe Chemical Co., Ltd. |
| Copper sulfate pentahydrate | / | Guizhou Tianlihe Chemical Co., Ltd. |
| zinc oxide | / | Guizhou Tianlihe Chemical Co., Ltd. |
| copper oxide | / | Guizhou Tianlihe Chemical Co., Ltd. |
| titanium dioxide | R60 | Nanjing Tianxing New Materials Co., Ltd. |
| titanium dioxide | / | Hangzhou Harmony Chemical Co., Ltd. |
| Diboron trioxide | 500 mesh | Guizhou Tianlihe Chemical Co., Ltd. |
| alumina | / | Guizhou Tianlihe Chemical Co., Ltd. |
| magnesium oxide | / | Guizhou Tianlihe Chemical Co., Ltd. |
| Laser Particle Size Analyzer | MSU2000 type | Malvern Instruments Limited, UK |
| Xinwei Battery Testing System | CT-4008-5V50m-A-164 | Xinwei Company |
| High-efficiency vacuum drying oven | KP-BAK-03E-02 | Dongguan Kerui Electromechanical Equipment Co., Ltd. |

Wherein, the particle size test of the sodium ion positive electrode material in the examples of the present invention refers to the particle size distribution laser diffraction method in accordance with the national standard GB/T19077-2016 of the People's Republic of China. Testing instrument: Malvern, Master Size 2000 laser particle size analyzer. Test steps: weigh 1g of powder, add 60ml of pure water, externally sonicate for 5 minutes, pour the sample into the sampler for testing, and record the test data. Test conditions: The testing principle is based on the Mie theory(light scattering), with a detection angle of 0 ~135°, an external ultrasonic intensity of 40KHz and 180w, a particle refractive index of 1.692, a particle absorption index of 1, a sample testing time of 6 seconds, a background test snap count of 6000 times, and a light shielding degree of 8-12%.

wherein, the testing method for free sodium (residual alkali) in the sodium ion positive electrode material in the example of the present invention: weigh 30g ± 0.01g of the sample, place the sample in a 250mL conical flask, add a magnet, and add 100mL of deionized water; Place it on a magnetic stirrer and turn on the stirrer to stir for 30 minutes; Filter the mixed solution using qualitative filter paper and funnel; Transfer 1mL of filtrate into a 100mL beaker and add a magnet; Place the beaker on a magnetic stirrer and add 2 drops of phenolphthalein indicator; Titrate with 0.05mol/L hydrochloric acid standard titration solution ($V_{initial}$=0) until the color of the solution changes from red to colorless, record the volume $V_1$ of 0.05mol/L hydrochloric acid standard titration solution (endpoint 1), $V_1$=$V_{endpoint\ 1}$-$V_{initial}$); Add 2 drops of methyl red indicator, and the color of the solution changes from colorless to yellow; Titrate with 0.05mol/L hydrochloric acid standard titration solution until the color of the solution changes from yellow to orange; Heat the beaker on the heating furnace until the solution boils (the color of the solution changes from orange to yellow); Remove the beaker and cool to room temperature; Place the beaker on a magnetic stirrer again and titrate with 0.05mol/L hydrochloric acid standard titration solution until the color of the solution changes from yellow to light red. Record the volume $V_2$ of 0.05mol/L hydrochloric acid standard titration solution (endpoint 2, $V_2$=$V_{endpoint\ 2}$-$V_{endpoint\ 1}$).

The calculation formula for free sodium content is as follows:

$$Na_2CO_3(wt\%) = \frac{c \times V_2 \times 10^{-3} \times M_1 \times 100}{m} \times 100\%$$

$M$ is the relative atomic mass of sodium, $M_1$ is the relative atomic mass of sodium carbonate, $M_2$ is the relative atomic mass of sodium hydroxide, m is the mass of the sample /g; $V_1$ is the first titration endpoint /mL; $V_2$ is the second titration endpoint /mL, C is the concentration of hydrochloric acid standard titration solution, mol/L, "100" in the molecule represents the dilution factor.

wherein, the testing method for the pH value of the sodium ion positive electrode material in the example of the present invention:

The PHSJ-3F Rex pH Meter was used to measure the pH, and the specific method is as follows: accurately weigh 5g $\pm$ 0.05g of the sample, add deionized water in a 1:9 ratio of material to water, prepare into a 10% suspension, add a magnet, and place it on a magnetic stirrer tray. The speed of the magnetic stirrer is 88or/min, and stir for 5 minutes; Filter the mixed solution using qualitative filter paper and funnel, place it in a constant temperature water bath set at 25 °C, and filter at a constant temperature for 20 $\pm$ 5 minutes; Rinse the electrode with sample solution. After rinsing, insert the electrode and temperature sensor into the sample solution. When the reading is stable and the temperature shows 25 °C, record the pH value.

The sodium ion battery of the present invention is composed of an electrode, electrolyte, separator, and aluminum-plastic film. Specifically, the electrode comprises a positive electrode and a negative electrode. The positive electrode is made of a positive electrode current collector and a positive electrode active material coated on the positive electrode current collector, as well as materials such as adhesives and conductive additives etc. The positive electrode active material is the pre-sodium treated positive electrode material for copper-zinc-based sodium ion battery of the present invention. The negative electrode is made of materials such as a current collector, a negative electrode active substance coated on the current collector, adhesive, conductive additives, etc. Separator is a commonly used PP/PE film in this industry, used to separate the positive and negative electrodes from each other; Aluminum-plastic film is the containment body for positive electrode, negative electrode, separator, and electrolyte.

The adhesive in the present invention is mainly used to improve the adhesion characteristics between positive electrode active material particles and between positive electrode active material particles and the current collector. The adhesive in this invention can be selected from conventional adhesives used in the industry available on the market. Specifically, the adhesive can be selected from polyvinyl alcohol, carboxymethyl cellulose, hydroxypropyl cellulose, polyvinyl chloride, carboxylated polyvinyl chloride, polyvinyl fluoride, polymers containing ethylene oxygen, polyvinylpyrrolidone, polyurethane, polytetrafluoroethylene, polyvinylidene 1,1-difluoroethylene, polyethylene, polypropylene, butadiene styrene rubber, acrylic (ester) butadiene styrene rubber, epoxy resin, nylon or combination thereof.

The conductive additive in the present invention can be conventional conductive additives used in the industry that are available on the market. Specifically, conductive additives can be selected from carbon-based materials (such as natural graphite, artificial graphite, carbon black, acetylene black, Kochen black, or carbon fibers), metal-based materials (such as metal powders or fibers including copper, nickel, aluminum, silver, etc.), conductive polymers (such as polyphenylene derivatives), or combination thereof.

In the following example embodiments, the specific operation method for producing a sodium ion buckle battery using the positive electrode material of the present invention is as follows:

Positive electrode preparation: the positive electrode material of the present invention, adhesive polyvinylidene fluoride (PVDF), and conductive carbon black (S.P) are thoroughly mixed in a weight ratio of 7:2:1, stirred to form a uniform slurry, coated on an aluminum foil current collector, dried, and pressed into an electrode plate. Punch, weigh, bake the pressed positive electrode plate, and then assemble the battery in a vacuum glove box. First put the bottom of the button type battery shell, put foam nickel (2.5mm) and negative metal sodium plate (manufacturer: Shenzhen Youyan Technology Co., Ltd.) on the bottom of the shell, inject 0.5g of electrolyte in an environment with relative humidity less than 1.5%. The electrolyte is a mixed solvent with the mass ratio of ethylene carbonate (EC), diethyl carbonate (DEC) and dimethyl carbonate (DMC) of 1:1:1, and the electrolyte is 1mol/L sodium hexafluorophosphate solution. Put a separator, positive electrode plate, and then cover the shell cover of the button type battery for sealing. The button type battery model is CR2430.

A further detailed description of the technical solution of the present invention will be provided through specific examples and in conjunction with the accompanying drawings below.

Example 1

Weigh the corresponding amounts of sodium carbonate, zinc sulfate heptahydrate, ferrous sulfate heptahydrate, manganese sulfate, nickel sulfate, and copper oxide in a stoichiometric ratio of Na: Zn: Fe: Mn: Ni: Cu=1.0:0.02:0.25:0.35:0.3:0.08.

S1: Wet pre-sodium: Dissolve zinc sulfate heptahydrate, ferrous sulfate heptahydrate, manganese sulfate, nickel sulfate, and sodium carbonate (sodium carbonate is only added to 40% of the weighed weight) in water according to the weighed weight (record the weight of water) to form a salt solution for later use. Weigh the corresponding amount of copper oxide and dissolved salt solution in a mass ratio of material: water: zirconium beads=1.5:4.5:3.5 and add it to a sand grinder for sand grinding for 30 minutes to obtain a mixed solution containing copper-zinc-based elements.

S2: Conduct spray drying of the mixed solution containing copper zinc base elements of S1 to obtain pre-sodium treated precursor powder of positive electrode material for copper-zinc-based sodium ion battery.

S3: Mix the precursor powder of S2 with sodium carbonate (wherein, the amount of sodium carbonate is the remaining amount of the initially weighed weight according to the stoichiometric ratio), and keep the well-mixed material at a constant temperature of 870 °C for 20 hours in an air atmosphere. Then, cool naturally and use an ultrafine stone disc mill with a grinding disc spacing of 1.0mm and a rotation speed of 1800r/min to perform crushing to obtain a semi-finished product. Then, the above-mentioned semi-finished products are mixed with magnesium source (magnesium element) in a molar ratio of 1:0.004, and magnesium oxide is weighed and placed in a ball-mill, ball milling at a frequency of 40Hz for 30 minutes. The well-mixed materials are kept at a constant temperature of 700 °C for 5 hours in an air atmosphere, then cooled naturally. After ball milling again and sieving, the pre-sodium treated positive electrode material A1 for copper-zinc based-sodium ion battery is obtained.

Perform the testing for particle size, pH value and sodium carbonate in free sodium on the positive electrode material A1 for the sodium ion battery in this example. Prepare A1 into a button type battery for cyclic testing, and the cyclic curve of 0.5C under 4.0-2.0V conditions is shown in Figure 1.

**Example 2**

Weigh the corresponding amounts of sodium carbonate, zinc sulfate heptahydrate, ferrous sulfate heptahydrate, manganese sulfate, nickel sulfate, and copper oxide in a stoichiometric ratio of Na: Zn: Fe: Mn: Ni: Cu=1.0:0.02:0.33:0.30:0.3:0.05.

S1: Wet pre-sodium: Dissolve zinc sulfate heptahydrate, ferrous sulfate heptahydrate, manganese sulfate, nickel sulfate, and sodium carbonate (sodium carbonate is only added to 60% of the weighed weight) in water according to the weighed weight (record the weight of water) to form a salt solution for later use. Weigh the corresponding amount of copper oxide and dissolved salt solution in a mass ratio of material: water: zirconium beads=1.5:5.0:3.0 and add it to a sand grinder for sand grinding for 50 minutes to obtain a mixed solution containing copper-zinc-based elements.

S2: Conduct spray drying of the mixed solution containing copper-zinc-based elements of S1 to obtain pre-sodium treated precursor powder of positive electrode material for copper-zinc-based sodium ion battery.S3: Mix the precursor powder of S2 with sodium carbonate (where the amount of sodium carbonate is the remaining amount of the initially weighed weight according to the stoichiometric ratio), and keep the well-mixed material at a constant temperature of 880 °C for 18 hours in an air atmosphere. Then, cool naturally and ball mill at 50Hz for 20 minutes to obtain semi-finished products. Then, the above-mentioned semi-finished products are mixed with an aluminum source (aluminum element) in a ratio of 1:0.002, and aluminum oxide is weighed and placed in a ball-mill, ball milling at a frequency of 50Hz for 30 minutes. The well-mixed materials are kept at a constant temperature of 650 °C for 6 hours in an air atmosphere, then cooled naturally. After ball milling again and sieving, the pre-sodium treated positive electrode material A2 for copper-zinc-based sodium ion battery is obtained.

Perform testing for particle size, pH value and sodium carbonate in free sodium on the positive electrode material A2 for the sodium ion battery in this example. Prepare A2 into a button type battery for cyclic testing, and the cyclic curve of 0.5C under 4.0-2.0V conditions is shown in Figure 1.

**Example 3**

Weigh the corresponding amounts of sodium carbonate, zinc sulfate heptahydrate, ferrous sulfate heptahydrate, manganese sulfate, nickel sulfate, and copper oxide in a stoichiometric ratio of Na: Zn: Fe: Mn: Ni: Cu=1.0:0.03: 0.36: 0.33: 0.25: 0.03.

S1: Wet pre-sodium: Dissolve zinc sulfate heptahydrate, ferrous sulfate heptahydrate, manganese sulfate, nickel sulfate, and sodium carbonate (sodium carbonate is only added to 30% of the weighed weight) in water according to the weighed weight (record the weight of water) to form a salt solution for later use. Weigh the corresponding amount of copper oxide and dissolved salt solution in a mass ratio of material: water: zirconium beads=1.2:5.0:3.0 and add it to a sand grinder for sand grinding for 40 minutes to obtain a mixed solution containing copper-zinc-based elements.

S2: Conduct spray drying of the mixed solution containing copper-zinc-based elements of S1 to obtain pre-sodium treated precursor powder of positive electrode material for copper-zinc based sodium ion battery.

S3: Mix the precursor powder of S2 with sodium carbonate (where the amount of sodium carbonate is the remaining amount of initially weighed weight according to the stoichiometric ratio), and keep the well-mixed material at a constant temperature of 910 °C for 12 hours in an air atmosphere. Then, cool naturally, and ball mill at 50Hz for 10 minutes to obtain semi-finished products. Then, the above-mentioned semi-finished products are mixed with a boron source (boron element) in a ratio of 1:0.002, and boric acid is weighed and placed in a ball-mill, ball milling at a frequency of 40Hz for 20 minutes. The well-mixed materials are kept at a constant temperature of 300 °C for 3 hours in an air atmosphere, then cooled naturally. After ball milling again and sieving, the pre-sodium treated positive electrode material A3 for copper-zinc-based sodium ion battery is obtained.

Perform the testing for particle size, pH value and sodium carbonate in free sodium on the positive electrode material A3 for the sodium ion battery in this example. Prepare A3 into a button type battery for cyclic testing, and the cyclic curve of 0.5C under 4.0-2.0V conditions is shown in Figure 1.

**Example 4**

Weigh the corresponding amounts of sodium carbonate, copper sulfate pentahydrate, ferrous sulfate heptahydrate, manganese sulfate, nickel sulfate, and zinc oxide in a stoichiometric ratio of Na: Zn: Fe: Mn: Ni: Cu=0.78: 0.04: 0.35: 0.34: 0.25: 0.04.

S1: Wet pre-sodium: dissolve copper sulfate pentahydrate, ferrous sulfate heptahydrate, manganese sulfate, nickel sulfate, and sodium carbonate (only 50% of the weighed sodium carbonate is added) in water according to the weighed weight (record the weight of water) to form a salt solution for later use. Weigh the corresponding amount of zinc oxide and dissolved salt solution in a mass ratio of material: water: zirconium beads=1.0:3.0:3.0 and add it to a sand grinder for sand grinding for 20 minutes to obtain a mixed solution containing copper -zinc-based elements.

S2: Conduct spray drying of the mixed solution containing copper-zinc-based elements of S1 to obtain pre-sodium treated precursor powder of positive electrode material for copper-zinc-based sodium ion battery .S3: Mix the precursor powder of S2 with sodium carbonate (where the amount of sodium carbonate is the remaining amount of the initially weighed weight according to the stoichiometric ratio), and keep the well-mixed material at a constant temperature of 930 °C for 10 hours in an air atmosphere. Then, cool naturally, ball mill at 42Hz for 40 minutes to obtain semi-finished products. Then, the above-mentioned semi-finished products are mixed with a phosphorus source (phosphorus element) in a ratio of 1:0.003, and ammonium dihydrogen phosphate is weighed and placed in a ball-mill, ball milling at a frequency of 48Hz for 25 minutes. The well-mixed materials are kept at a constant temperature of 450 °C for 4.5 hours in an air atmosphere, then cooled naturally. After ball milling again and sieving, a pre-sodium treated positive electrode material A4 for copper-zinc-based sodium ion battery is obtained.

Perform the testing for particle size, pH value, and sodium carbonate in free sodium on the positive electrode material A4 for the sodium ion battery in this example. Prepare A4 into a button type battery for cyclic testing, and the cyclic curve of 0.5C under 4.0-2.0V conditions is shown in Figure 1.

**Example 5**

Weigh the corresponding amounts of sodium carbonate, copper sulfate pentahydrate, ferrous sulfate heptahydrate, manganese oxalate, nickel oxalate, and zinc oxide in a stoichiometric ratio of Na: Zn: Fe: Mn: Ni: Cu=0.93: 0.04: 0.31: 0.38: 0.22: 0.04.

S1: Wet pre-sodium: Dissolve copper sulfate pentahydrate, ferrous sulfate heptahydrate, manganese sulfate, nickel sulfate, and sodium carbonate (only 35% of the weighed sodium carbonate is added) in water according to the weighed weight (record the weight of water) to form a salt solution for later use. Weigh the corresponding amount of zinc oxide and dissolved salt solution in a mass ratio of material: water: zirconium beads=1.3:3.8:3.0 and add it to a sand grinder for sand grinding for 45 minutes to obtain a mixed solution containing copper-zinc-based elements.

S2: Conduct spray drying of the mixed solution containing copper-zinc-based elements of S1 to obtain pre-sodium treated precursor powder of positive electrode material for copper-zinc-based sodium ion battery.

S3: Mix the precursor powder of S2 with sodium carbonate (where the amount of sodium carbonate is the remaining amount of weight initially weighed according to the stoichiometric ratio), and keep the well-mixed material at a constant temperature of 900 °C for 16 hours in an air atmosphere. Then, cool naturally and use an ultrafine stone disc mill with a grinding disc spacing of 0.4mm and a rotation speed of 2500r/min to perform crushing to obtain a semi-finished product. Then, the above-mentioned semi-finished products are mixed with a niobium source (niobium element) in a molar ratio of 1:0.005, and niobium pentoxide is weighed and placed in a ball-mill, ball milling at a frequency of 35Hz for 45 minutes. The well-mixed materials are kept at a constant temperature of 630 °C for 8.5 hours in an air atmosphere, then cooled naturally. After ball milling again and sieving, pre-sodium treated positive electrode material A5 for copper-zinc-based sodium ion battery is obtained.

Perform the testing for particle size, pH value, and sodium carbonate in free sodium on the positive electrode material A5 for the sodium ion battery in this example. Prepare A5 into a button type battery for cyclic testing, and the cyclic curve of 0.5C under 4.0-2.0V conditions is shown in Figure 1.

### Example 6

Weigh the corresponding amounts of sodium carbonate, copper sulfate pentahydrate, ferrous sulfate heptahydrate, manganese carbonate, nickel carbonate, and zinc oxide in a stoichiometric ratio of Na: Zn: Fe: Mn: Ni: Cu=0.88: 0.08: 0.30: 0.38: 0.22: 0.01.

S1: Wet pre-sodium: Dissolve copper sulfate pentahydrate, ferrous sulfate heptahydrate, manganese carbonate, nickel carbonate, and sodium carbonate (only 25% of the weighed sodium carbonate is added) in water according to the weighed weight (record the weight of water) to form a salt solution for later use. Weigh the corresponding amount of zinc oxide and dissolved salt solution in a mass ratio of material: water: zirconium beads=1.5:5.0:4.3 and add it to a sand grinder for sand grinding for 90 minutes to obtain a mixed solution containing copper -zinc-based elements.

S2: Conduct spray drying of the mixed solution containing copper-zinc-based elements of S1 to obtain pre-sodium treated precursor powder of positive electrode material for copper-zinc-based sodium ion battery.

S3: Mix the precursor powder of S2 with sodium carbonate (where the amount of sodium carbonate is the remaining amount of weight initially weighed according to the stoichiometric ratio), and keep the well-mixed material at a constant temperature of 940 °C for 8 hours in an air atmosphere. Then, cool naturally and use an ultrafine stone disc mill with a grinding disc spacing of 0.4mm and a rotation speed of 3000r/min to perform crushing to obtain a semi-finished product. Then, the above-mentioned semi-finished products are mixed with a titanium source (titanium element) in a molar ratio of 1:0.007, and titanium dioxide is weighed and placed in a ball-mill, ball milling at a frequency of 48Hz for 55 minutes. The well-mixed materials are kept at a constant temperature of 800 °C for 6 hours in an air atmosphere, then cooled naturally. After ball milling again and sieving, pre-sodium treated positive electrode material A6 for copper-zinc-based sodium ion battery is obtained.

Perform the testing for particle size, pH value, and sodium carbonate in free sodium on the positive electrode material A6 for the sodium ion battery in this example. Prepare A6 into a button type battery for cyclic testing, and the cyclic curve of 0.5C under 4.0-2.0V conditions is shown in Figure 1.

### Comparative example 1

The only difference, like the preparation method in example 6, is that sodium carbonate does not need to be added during the sand grinding of S1. All sodium carbonate weighed according to the stoichiometric ratio is added in the step of S3 to prepare the pre-sodium treated positive electrode material D1 for copper-zinc-based sodium ion battery.

Perform the testing for particle size, pH value, and sodium carbonate in free sodium on the positive electrode material D1 for the sodium ion battery in this comparative example. Prepare D1 into a button type battery for cyclic testing, and the cyclic curve of 0.5C under 4.0-2.0V conditions is shown in Figure 1.

From the above examples and comparative example, it can be seen that the positive electrode material in comparative example 1 was not pre-sodium treated without adding sodium carbonate during sand grinding. Although they were all sintered, the sodium ions on the surface of the material could not fully diffuse and migrate to inside of the structure of the material without pre-sodium treatment. Therefore, the $Na_2CO_3$ content in the free sodium of comparative example 1 was 5.75%, which is much higher than the $Na_2CO_3$ content in examples 1-6 (all within 3.5%). Moreover, the cycle retention rate of comparative example 1 at 4.0-2.0V 0.5C/0.5C 50 cycles was only 80.13%, far lower than the cycle retention rate of examples 1-6 at 4.0-2.0V 0.5C/0.5C 50 cycles. By comparing examples 1-6 with comparative example 1, it can be seen that after pre-sodium treatment, some sodium sources are introduced into the material structure in advance, and then sintered. The sodium sources inside the material structure are transformed into sodium ions, which undergo sufficient diffusion and migration inside the material structure. On the one hand, this improves the cycling performance of the material, and on the other hand, it reduces the sodium content free on the surface of the material, reduces the reaction between the material and water and carbon dioxide in the air, improves the air stability of the material, reduces the side reactions between the material and the electrolyte during cycling process, and reduces circulating gas production.

The applicant declares that the above is only a specific implementation of the present invention, but the scope of protection of the present invention is not limited to this. Those skilled in the art should be aware that any changes or replacements that those skilled in the art can easily think of within the technical scope of disclosure of the present invention fall within the scope of protection and disclosure of the present invention.

## Claims

1. A method for preparing a pre-sodium treated positive electrode material for copper-zinc-based sodium ion battery, which is **characterized in that**, the method comprises the steps of:

    weighing the corresponding amount of sodium salt, oxide of zinc or zinc salt, iron salt, manganese salt, nickel salt, and copper salt in a stoichiometric ratio of Na:Zn:Fe:Mn:Ni:Cu=0.78:0.04:0.25~0.36:0.34:0.25:0.04;
    S1: wet pre-sodium: adding sodium salt, iron salt, manganese salt, nickel salt, and copper salt to a measuring cup and stirring with water to dissolve to obtain a mixed salt solution, wherein only 50% of the weighed weight of sodium salt is added; adding the oxide of zinc and the mixed salt solution to a sand grinder for sand grinding for a certain period of time to obtain a mixed solution containing copper-zinc-based elements;
    S2: spray drying of the mixed solution containing copper-zinc-based elements of S1 to obtain precursor powder of positive electrode material for copper-zinc-based sodium ion battery;
    S3: mixing the precursor powder of S2 with the remaining sodium salt, sintering, adding N source for coating, and finally crushing to obtain the positive electrode material for copper-zinc-based sodium ion batteries, wherein the N source is at least one selected from Ca, Ti, Mg, Al, W, Zr, Sr, B, Ba , Ce, Mo, Co, La, Si, P, S or Li.

2. The method for preparing a pre-sodium treated positive electrode material for copper-zinc-based sodium ion battery according to claim 1, wherein the oxide of zinc is zinc oxide, the nickel salt or manganese salt is carbonate, sulfate, oxalate or acetate, iron salt is ferrous sulfate heptahydrate, ferrous sulfate monohydrate, ferrous oxalate or ferrous chloride, copper salt is anhydrous copper sulfate, and zinc salt is anhydrous zinc sulfate, zinc sulfate monohydrate or zinc sulfate heptahydrate.

3. The method for preparing a pre-sodium treated positive electrode material for copper-zinc-based sodium ion battery according to claim 1, wherein the corresponding amount of material : water : zirconium beads in a mass ratio of 1~1.5:3~5:2~5.0 is weighed for the sand grinding process.

4. The method for preparing a pre-sodium treated positive electrode material for copper-zinc-based sodium ion battery according to claim 1, wherein in step S1, the sodium salt is sodium carbonate, sodium bicarbonate, sodium acetate, sodium nitrate, or sodium chloride.

5. The method for preparing a pre-sodium treated positive electrode material for copper-zinc-based sodium ion battery according to claim 1, wherein the sintering is performed twice, with a first sintering at a temperature of 870°C~945°C, and a second sintering at a temperature of 300°C~800°C.

6. The method for preparing a pre-sodium treated positive electrode material for copper-zinc-based sodium ion battery according to claim 1, wherein the method for coating is either solid-phase or liquid-phase.

7. The method for preparing a pre-sodium treated positive electrode material for copper-zinc-based sodium ion battery according to claim 1, wherein the method for crushing is ball milling, mechanical crushing, or air flow crushing, and the median particle size D50 of the positive electrode material for copper-zinc-based sodium ion battery after crushing is 5.2~14$\mu$m.

8. The method for preparing a pre-sodium treated positive electrode material for copper-zinc-based sodium ion battery according to claim 1, wherein the chemical formula of the positive electrode material for copper-zinc-based sodium ion battery is: $Na_mCu_xZn_yFe_zM_{1-x-y-z}O_2$, $0.75 \leq m \leq 1.08$, M is at least one selected from Ni, Co, Mn, Ca, Ti, Mg, Al, W, Zr, Sr, B, Ba, Ce, Mo, La, Si, P, S or Li, wherein $0.005 \leq x \leq 0.10$, $0.005 \leq y \leq 0.09$, $0.20 \leq z \leq 0.45$.

9. A pre-sodium treated positive electrode material for copper-zinc-based sodium ion battery, which is **characterized in that** the material is prepared by the method for preparing a pre-sodium treated positive electrode material for copper-zinc-based sodium ion battery of any one of claims 1 to 8.

10. A positive electrode for sodium ion battery, which is **characterized in that** the positive electrode for sodium ion battery comprises the pre-sodium treated positive electrode material for copper-zinc-based sodium ion battery of claim 9 as a positive electrode active substance.

11. A sodium ion battery, which is **characterized in that** the sodium ion battery comprises the positive electrode for sodium ion battery of claim 10, a negative electrode, and an electrolyte containing sodium salt.

12. The sodium ion battery of claim 11, wherein it is applied in power sources in distributed energy storage systems, electric tools, or electric vehicles.

13. A power system, energy storage system or mobile storage device, which is **characterized in that** the system or device is prepared by the sodium ion battery of claim 11.

Figure 1

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 4 276 073 A1 (GUIZHOU ZHENHUA E CHEM INC [CN]) 15 November 2023 (2023-11-15) * claims; examples * ----- | 1-13 | INV. C01G49/00 C01G53/51 H01M4/505 |
| A | WO 2023/124357 A1 (ZHEJIANG AMANDARRY NEW MATERIALS TECH CO LTD [CN]) 6 July 2023 (2023-07-06) * claims; examples * ----- | 1-13 | |
| A | CN 115 548 285 A (GUIZHOU ZHENHUA NEW MAT CO LTD ET AL.) 30 December 2022 (2022-12-30) * claims; examples * ----- | 1-13 | |
| A | CN 115 377 394 A (SHANGHAI LINGFANG NEW ENERGY TECH CO LTD) 22 November 2022 (2022-11-22) * claims; examples * ----- | 1-13 | |
| A | CN 116 504 946 A (HUZHOU CHAONA NEW ENERGY TECH CO LTD) 28 July 2023 (2023-07-28) * claims; examples * ----- | 1-13 | TECHNICAL FIELDS SEARCHED (IPC) C01G H01M |

The present search report has been drawn up for all claims

| Place of search | Date of completion of the search | Examiner |
|---|---|---|
| Munich | 21 March 2025 | Nobis, Barbara |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons
.............................................................................
& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 20 6706

This annex lists the patent family members relating to the patent documents cited in the above-mentioned European search report.
The members are as contained in the European Patent Office EDP file on
The European Patent Office is in no way liable for these particulars which are merely given for the purpose of information.

21-03-2025

| Patent document cited in search report | | Publication date | Patent family member(s) | | Publication date |
|---|---|---|---|---|---|
| EP 4276073 | A1 | 15-11-2023 | CN | 114956203 A | 30-08-2022 |
| | | | EP | 4276073 A1 | 15-11-2023 |
| | | | JP | 2023164343 A | 10-11-2023 |
| | | | KR | 20230153944 A | 07-11-2023 |
| | | | US | 2023352676 A1 | 02-11-2023 |
| WO 2023124357 | A1 | 06-07-2023 | CN | 114361435 A | 15-04-2022 |
| | | | WO | 2023124357 A1 | 06-07-2023 |
| CN 115548285 | A | 30-12-2022 | CN | 115548285 A | 30-12-2022 |
| | | | EP | 4335825 A1 | 13-03-2024 |
| | | | JP | 2024037155 A | 18-03-2024 |
| | | | KR | 20240034141 A | 13-03-2024 |
| | | | US | 2024079577 A1 | 07-03-2024 |
| CN 115377394 | A | 22-11-2022 | NONE | | |
| CN 116504946 | A | 28-07-2023 | NONE | | |

EPO FORM P0459

For more details about this annex : see Official Journal of the European Patent Office, No. 12/82